# EUROPEAN PATENT APPLICATION

(11) **EP 2 003 310 A2**
(43) Date of publication of application: **17.12.2008**
(21) Application number: 08252058.6
(22) Date of filing: 16.06.2008
(51) Int. Cl.: F02C 7/042, F02K 3/06

(54) **Variable geometry nacelle for an aircraft engine**

(30) Priority: 15.06.2007 US 763673
(71) Applicant: United Technologies Corporation, Hartford, CT 06101 (US)
(72) Inventor: Chaudhry, Zaffir A., South Glastonbury, Connecticut 06073 (US)
(74) Representative: Leckey, David Herbert

(57) **Abstract**

A nacelle (12) includes leading edge slats (28) movable to modify inlet shape and area airflow into the nacelle (12). The articulating leading edge slats (28) are movable for tailoring incoming airflow to current aircraft operating conditions. An actuator (36) disposed within a thickness of the nacelle (12) drives leading edge slats (28) to a desired position to vary the inlet area and shape.

## Description

### BACKGROUND OF THE INVENTION

This invention generally relates to an aircraft engine nacelle with a variable leading edge.

An aircraft nacelle directs incoming air into an aircraft engine and functions in many diverse conditions ranging from high angle low speed take-off conditions to low angle high speed cruise conditions. During high speed cruise conditions, it is desired to reduce aerodynamic drag caused by the radial thickness of the nacelle. In contrast, during take-off conditions it is desired to provide an opening that is sufficiently large to provide the desired air flow required for efficient engine operation. Accordingly, conventional nacelle structures are a compromise to provide good performance in all operating conditions, but not the best performance in any condition.

Accordingly, it is desirable to design and develop a nacelle structure that is adaptable to varying aircraft operating conditions.

### SUMMARY OF THE INVENTION

The example nacelle includes leading edge slats movable to modify inlet area airflow properties into the nacelle.

The example nacelle includes a leading edge that defines airflow into an engine assembly. A plurality of articulating leading edge slats move relative to the leading edge to provide area modulation of an inlet of the nacelle for tailoring incoming airflow to current aircraft operating conditions. The articulated leading edge slats of the example nacelle tailors the leading edge and adjusts inlet area to current aircraft operating conditions to improve aircraft engine performance.

These and other features of the present invention can be best understood from the following specification and drawings, the following of which is a brief description.

### BRIEF DESCRIPTION OF THE DRAWINGS

Figure 1 is a perspective view of an example nacelle including articulating leading edge slats.
Figure 2, is a schematic depiction of different operating orientations of an aircraft nacelle.
Figure 3 is a cross-section of the example nacelle with articulating leading edge slats in a first position.
Figure 4 is a front view of the example nacelle with the example leading edge slats in a first position.
Figure 5 is a cross-sectional of the example nacelle with the articulating leading edge slats in a second position.
Figure 6 is a front view of the example nacelle with the articulating leading edge slats in the second position.
Figure 7 is a cross-sectional view of the example slats moved to modify the inlet shape.
Figure 8 is a front view of the example nacelle with some slats extended and some retracted to modify inlet shape and area.
Figure 9 is a cross-section of another example nacelle with articulating leading edge slats.
Figure 10 is a front view of the example nacelle of Figure 9.

### DETAILED DESCRIPTION OF THE PREFERRED EMBODIMENT

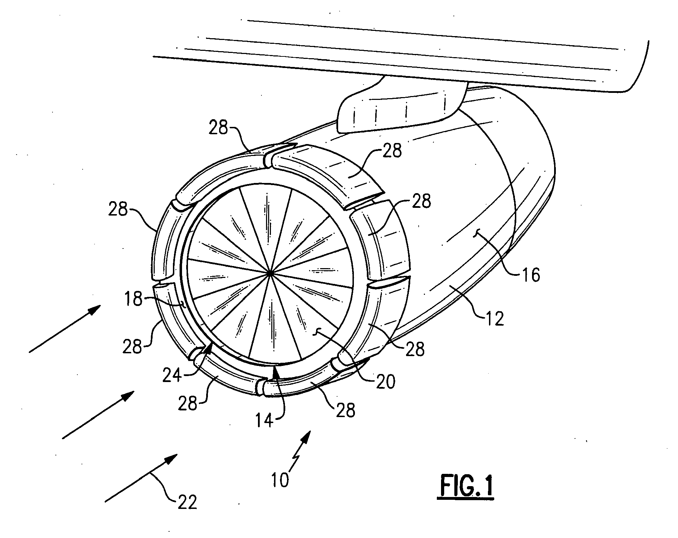

Referring to Figure 1, an aircraft engine assembly 10 is enclosed by an example nacelle 12. The nacelle 12 includes a leading edge 14 that defines airflow into the engine assembly 10. The leading edge 14 is forward and radially between an outer surface 16 and an inner surface 14 of the nacelle 12. The inner surface 14 and the outer surface 16 are radially spaced apart from each other. A fan 20 of the example aircraft engine assembly 10 receives incoming airflow 22. Air flow 22 enters the nacelle through an inlet 24 that is surrounded by a plurality of articulating leading edge slats 28 that provide area modulation of the inlet 24. Modulation of the inlet area 24 tailors incoming airflow to current aircraft operating conditions.

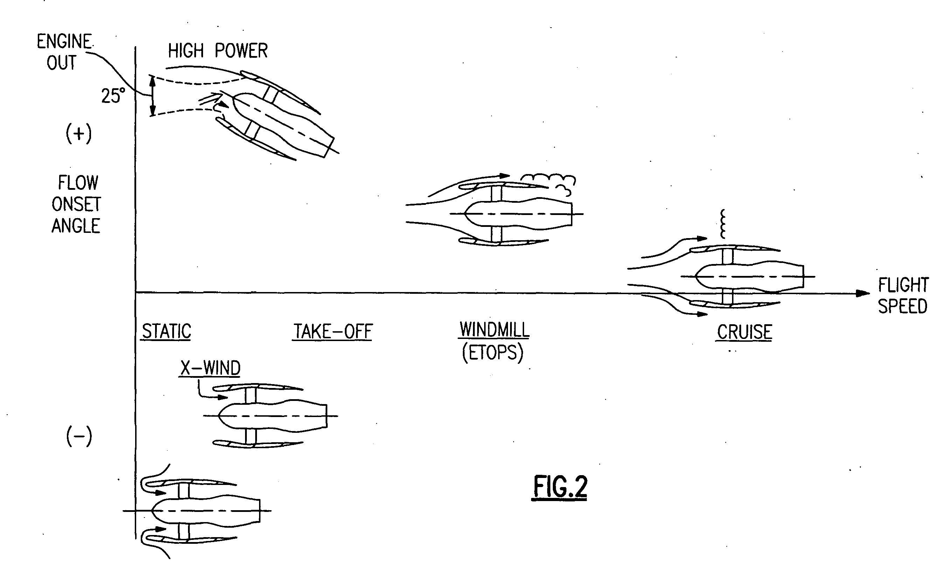

Referring to Figure 2, airflow into the nacelle 12 varies depending on the current aircraft operating conditions. Conventional nacelles include a fixed inlet that defines an opening determined to provide desired operation during many dissimilar aircraft operating conditions. For example, the inlet opening is larger than required for cruise conditions to provide the required airflow during take off conditions. Further, low speed, high power and high angles of attack, such as is experienced during take-off conditions requires a larger inlet opening both to provide the desired airflow into the engine and to prevent separation of that airflow on the interior surface of the nacelle. On the other hand, during cruise operation, a smaller inlet is sufficient and desirable to provide the desired airflow into the engine.

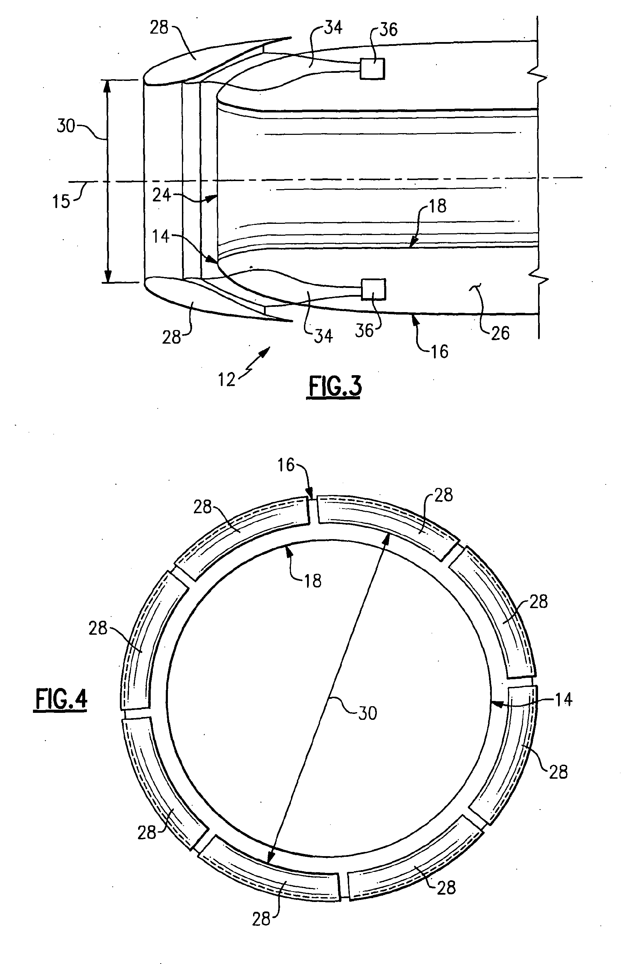

Referring to Figure 3, the leading edge slats 28 are movable to adjust and tailor the inlet area and shape to desired operation. The leading edge slats 28 are moved to provide a first inlet diameter 30 for the inlet 24. The first inlet diameter 30 is provided by moving the leading edge slats 28 radially outward and forward along axis 15 in a combined motion from the inner surface 18 of the nacelle 12.

Each of the leading edge slats 28 are driven by an actuator 36 through an arm 34. The actuator 36 is disposed within a radial space 26 between an exterior surface 16 and interior surface 18 of the nacelle 12. The example actuator 36 is a compact high power actuator of a size capable of fitting within the thickness of the nacelle 12. The example actuator 36 may be an electric motor, hydraulic cylinder or any other actuator for driving the leading edge slats 28 into a desired position.

The leading edge slats 28 include an arm 34 attached to the actuator 36. The arm 34 can include a mechanical linkage, hydraulic link or any other mechanism that transfers movement of the actuator 36 into desired movement of the leading edge slats 28.

Referring to Figure 4, a front view of the example nacelle 12 includes the plurality of leading edge slats 28 disposed about the entire periphery of the inlet 24. Each of the leading edge slats 28 are driven by an independently controlled actuator 36. Independent control provides for alternate configurations to tailor the leading edge to current operating conditions for generating the desired airflow properties into the engine assembly.

Each of the leading edge slats 28 illustrated in Figure 4 are extended axially forward and radially outward of the inner surface of the leading edge 14 and inner surface of the nacelle 12. The diameter 30 defined across the inner surface of the extended leading edge slats 28 enlarges the inlet area to provide more airflow during certain flight conditions, such as for example during takeoffs.

Each of the plurality of leading edge slats 28 extends circumferentially about a section of the nacelle leading edge 14. Each leading edge slat 28 is separate from adjacent leading edge slats 28 to facilitate movement and to enable independent operation to tailor the nacelle inlet to current operating conditions. The leading edge 14 defines a base line nacelle inlet size from which the plurality of leading edge slats 28 extend and retract. In the example illustrated in Figure 3, the leading edge slats 28 are extended axially forward and radially outward of the baseline leading edge 14 to tailor airflow properties into the engine as desired.

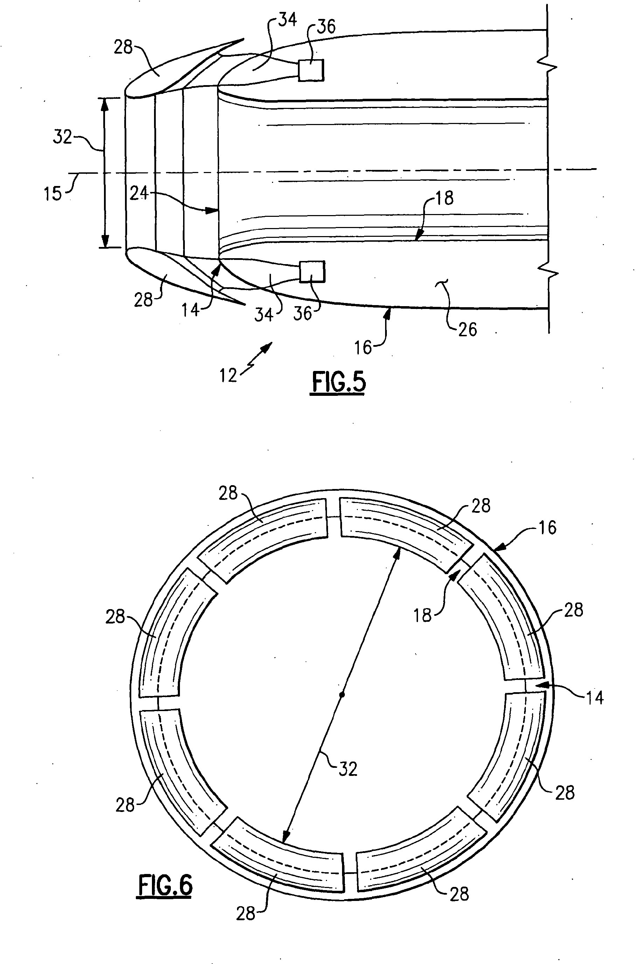

Referring to Figures 5 and 6, the example leading edge slats 28 are illustrated in an axially and radially retracted position where an inner diameter 32 between the leading edge slats 28 is smaller than the inner diameter 30 when in the extended position. Further, the plurality of leading edge slats 28 are disposed radially inward of the baseline leading edge 14. The retracted position of the leading edge slats 28 provides the decreased inlet opening size utilized to tailor airflow to operating conditions that require less inlet area such as during aircraft cruise, for example.

The leading edge slats 28 include a segmented configuration, where each of the leading edge slats 28 forms a circumferential section. The example leading edge slats 28 are discreetly located about the circumference of the nacelle 12 and do not conform to the outer surface 16 in either the extended or retracted position. The leading edge slats 28 may be configured to conform to a desired surface of the nacelle 12 in either the extended or retracted position. Further, each of the leading edge slats 28 can be independently operated to provide a desired inlet shape and area modulation responsive to current operating conditions.

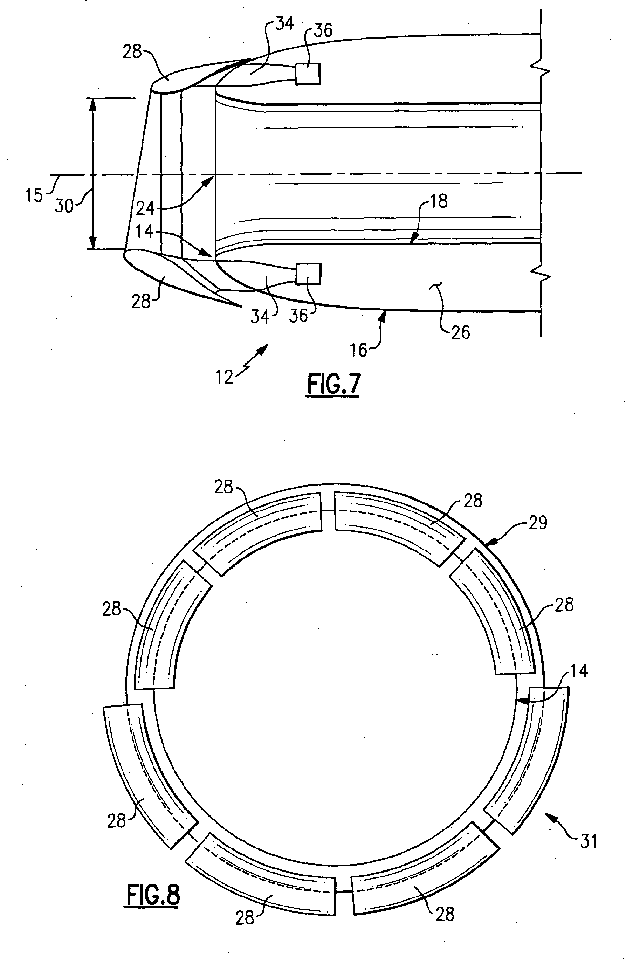

Referring to Figures 7 and 8, the example leading edge slats 28 are illustrated in a position to modify the area and shape of the inlet. The slats 28 of the top portion 29 are positioned in a radially retracted position and the slats 28 at a bottom portion 31 are positioned in a radially extended axially forward position. This position provides not only the desired area modulation but the modification of the shape of the inlet 24. The example shape is not circumferential, but instead includes a flattened out top portion 29 that provides an irregularly shaped inlet to target and tailor airflow in specific segments of the nacelle assembly 12. As appreciated, although the slats 28 in the top portion 29 are illustrated in the retracted position, each of the slats 28 can be adjusted to provide other desired irregular inlet shapes and areas to tailor intake airflow to desired operating conditions.

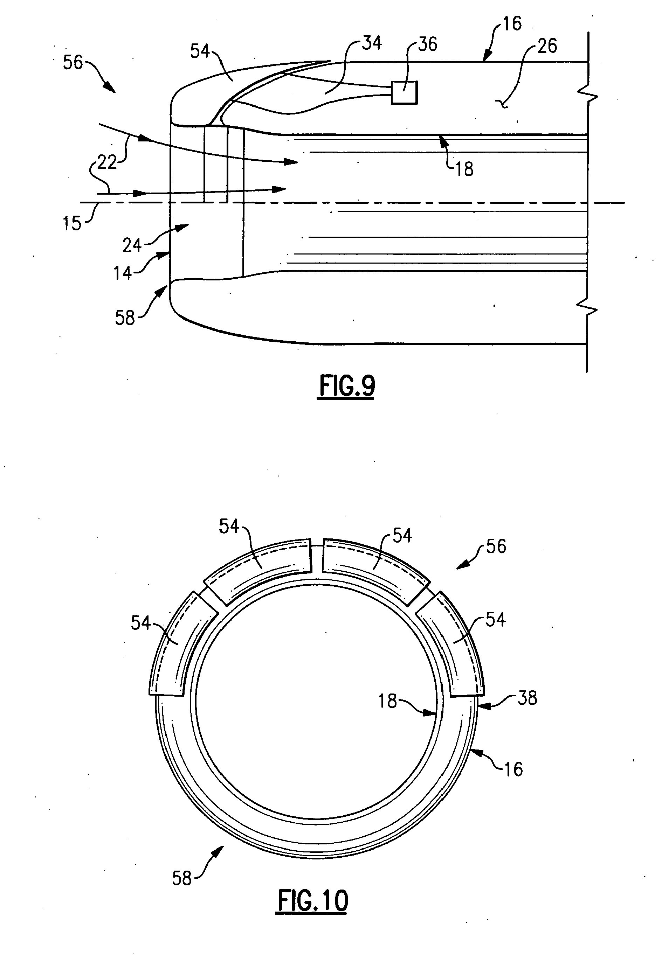

Referring to Figures 9 and 10, another example nacelle assembly 56 includes leading edge slats 54 disposed only about a portion of the periphery of the nacelle 12. The leading edge slats 54 also conform to the nacelle 12 when in the retracted position. The outer surface 55 of the slats 54 interfit within the outer surface 16 to provide a substantially continuous surface. The leading edge slats 54 are segmented circumferentially and extend only partially about the inlet 24 of the nacelle 12. Extending the leading edge slats 54 axially and radially outward about the top part of the nacelle 12 provides desired area and shape changes that in turn modulate airflow and aids in preventing separation of airflow in high angle of attack, high power, and low speed conditions. Further, because each of the leading edge slats 54 are independently actuateable, additional area and inlet shape configurations can be provided to further tailor airflow into the nacelle 12.

The example nacelle 12 tailors the leading edge and adjusts inlet shape and area to current aircraft operating conditions that in turn improves aircraft engine performance. Although an example of this invention has been disclosed, a worker of ordinary skill in this art would recognize that certain modifications are within the scope of this invention. For that reason, the following claims should be studied to determine the true scope and content of this invention.

## Claims

1. An aircraft engine nacelle assembly (12) comprising:
a leading edge (14) defining an opening area,
a plurality of slats (28; 54) disposed at least partially about said leading edge (14), wherein each of said plurality of slats (28; 54) are moveable relative to said leading edge (14) between a first position and as second position to tailor incoming airflow to current operating conditions.

2. The assembly as recited in claim 1, wherein said first position comprises said plurality of slats (28; 54) extending radially outward relative to said leading edge (14).

3. The assembly as recited in claim 1 or 2 , wherein said second position comprises said plurality of slats (28; 54) extending radially inward relative to said leading edge (14).

4. The assembly as recited in claim 1, wherein the first position comprises said slat (28; 54) extending outwardly and axially forward from said leading edge (14) and said second position comprises said slat (28; 54) retracting into and forming a surface of said leading edge (14).

5. The assembly as recited in any preceding claim, wherein said plurality of slats (28) extend about an entire circumference of said leading edge (14).

6. The assembly as recited in any of claims 1 to 4, wherein said plurality of slats (54) extend about an upper portion of said leading edge (14) .

7. The assembly as recited in any preceding claim, wherein each of said plurality of slats (28; 54) are movable independently of each other.

8. The assembly as recited in any preceding claim, including at least one actuator (36) for moving said plurality of slats (28; 54) relative to said leading edge (14).

9. The assembly as recited in claim 8, wherein said nacelle (12) includes a space between an inner surface and an outer surface within which said actuator (36) is supported.

10. An aircraft engine nacelle assembly (12) comprising;
an inner surface defining an air inlet opening (24),
an outer surface spaced radially apart from said inner surface;
a leading edge (14) disposed between said inner and outer surfaces, and
a plurality of slats (28; 54) movable relative to said leading edge (14) for adjusting air flow into said air inlet opening (24).

11. The nacelle assembly as recited in claim 10, wherein each of said plurality of slats (28; 54) are movable independent of each other between a retracted position and an actuated position.

12. The nacelle assembly as recited in claim 10 or 11 , wherein said plurality of slats (28; 54) define a portion of said leading edge (14) when in a retracted position.

13. The nacelle assembly as recited in claim 12, wherein said plurality of slats (28; 54) extend radially outward from said leading edge (14) when in an actuated position.

14. The nacelle assembly as recited in claim 10 or 11 wherein each of said plurality of slats (28; 54) are movable from a first position that is radially inward of said inner surface and a second position that is radially outboard and axially forward of said inner surface.

15. The nacelle assembly as recited in any of claims 10 to 14, wherein said plurality of slats (54) comprise a plurality of segments disposed about an upper portion of said leading edge (14).
